# EUROPÄISCHE PATENTSCHRIFT

(11) **EP 0 744 516 B1**
(45) Veröffentlichungstag und Bekanntmachung des Hinweises auf die Patenterteilung: **27.09.2000**
(21) Anmeldenummer: 96107339.2
(22) Anmeldetag: 09.05.1996
(51) Int. Cl.: E05B 17/00, B60J 5/06, B61D 19/00, E05F 15/14

(54) **Veriegelungssystem für eine Tür**
Door locking system
Système de verrouillage pour porte

(30) Priorität: 24.05.1995 CH 153795
(43) Veröffentlichungstag der Anmeldung: 27.11.1996
(73) Patentinhaber: DaimlerChrysler AG, 70567 Stuttgart (DE)
(72) Erfinder: Daniel, Peter Dipl.-Ing., 4133 Pratteln (CH); Bulsing, Jos, 9289 HS, Drogeham (NL)

(56) Entgegenhaltungen:
- EP-A- 0 320 591
- AT-B- 366 633
- FR-A- 2 374 495
- US-A- 4 486 040

## Beschreibung

Verriegelungssystem für eine automatische Schwenkschiebetür, welche am Ende der Schliessbewegung eine mechanische Verriegelung und ein Andrücken an die Türdichtung ausführt.

Verriegelungseinrichtungen dieser Art sind in verschiedenen Varianten aus dem Waggonbau bekannt. Eine bekannte Art des Verriegelns besteht darin, dass eine Tür einseitig unten und/oder oben Führungszapfen aufweist, welche am Ende der Schliessbewegung in portalseitige Führungsnuten einlaufen, die durch entsprechende Formgebung ein Verriegeln und Andrücken bewirken. Die andere Seite wird dann über die Antriebsmechanik in die Endstellung gezogen und in angedrückter Stellung gehalten.

In einer Werbeschrift von IFE (1992) resp. "kiekert" Automatiktüren GmbH (Türen für Schienenverkehrsmittel) wird ein Verriegelungsmechanismus mit Drehklinke beschrieben. Vor Erreichen der Endstellung wird eine am Türflügel angebaute Rolle von einem Haken im portalseitigen Verriegelungsbeschlag erfasst, wobei der Türflügel mit seinen Dichtgummiprofilen gegen die Einstiegsöffnung gepresst wird. Die Tür ist dann im geschlossenen Zustand an drei Punkten gesichert. Das Verriegeln der Tür erfolgt durch Einrasten einer unter Federspannung stehenden Drehklinke. Das Entriegeln der Tür zum Öffnen erfolgt durch pneumatisches oder manuelles Lösen der Verriegelungsklinke.

Die AT-Patentschrift Nr. 366 633 beschreibt und zeigt eine Schwenkschiebetür für Fahrzeuge, die eine zentrale Schwenk- und Verriegelungsmechanik aufweist, wobei in der Schliesslage portalseitig ein Drehhebel mit Rolle in eine türseitige Vertiefung eingreift und die Tür an eine Türdichtung heranzieht bis ein separater Verriegelungsmechanismus eingreift, worauf der Drehhebel wieder in seine Ausgangslage zurückschwenkt.

Die vorstehend genannten Lösungen sind für Einflügeltürenbei Personeneinstiegen mit üblicher Türbreite bis ca 1000 mm Breite geeignet. Für breitere Einflügeltüren können diese Konstruktionen nicht mehr eingesetzt werden, weil sie den speziellen Anforderungen bezüglich Stabilität und Sicherheit gegen Entriegeln nicht in jeder Situation standhalten. Aus diesen genannten Gründen werden für Türbreiten über 1100 mm nur Zweiflügeltüren angeboten. Für die zuverlässige Verriegelung einer breiteren Einflügeltüre sind deshalb neue Lösungen gefragt.

Es ist deshalb die Aufgabe der vorliegenden Erfindung, eine Verriegelungseinrichtung für eine überbreite Einflügeltür mit genügender Stabilität zu schaffen, bei welcher in der Schliessstellung das gesamte Türblatt durch in den Eckpunkten angeordnete Verriegelungen zuverlässig gesichert ist.

Diese Aufgabe wird durch die im Anspruch 1 gekennzeichnete und beispielhaft in Beschreibung und Zeichnung dargestellte Erfindung gelöst.

Die Erfindung zeichnet sich u.a. dadurch aus, dass das Verriegeln an einer überbreiten Einflügeltür durch eine an vier Eckpunkten angreifende, zentrale Schwenk- und Verriegelungsmechanik erfolgt, wobei durch definierte Hebelwinkel im Schliessgestänge die Schliessstellung, das Andrücken und Verriegeln in einem kontinuierlichen Bewegungsablauf der zentralen Schwenk- und Verriegelungsmechanik bis zu ihrer Anschlagstellung ausgeführt wird und das Andrücken und Verriegeln an den verschiedenen Stellen der Tür in zeitlich gestaffelter Reihenfolge und mechanisch zwangsläufig erfolgt.

Durch die definierten Hebelwinkel an der zentralen Schwenk- und Verriegelungsmechanik erfolgt beim Öffnen der Tür ein Loslösen des Türblattes aus der Dichtung von unten nach oben und umgekehrt beim Schliessen ein Andrücken von oben nach unten. Die zeitliche Verteilung der Andrückoperation ergibt eine erwünschte Reduktion der momentan aufzubringenden Schliesskräfte, was sich kostansparend auf die Antriebselemente und den Energieaufwand auswirkt.

Vorteilhafte Weiterbildungen sind in den Unteransprüchen aufgeführt.

Die Verriegelung links oben erfolgt über den Türtragarm von einem Schwenkwagen.

Die Verriegelung rechts oben erfolgt durch einen Konuszapfen, welcher am Ende der Schiebebewegung in eine, mit einem Schwenkwagen verbundenen, Verriegelungsbohrung fährt.

Die Verriegelung rechts unten erfolgt durch einen Verriegelungsblock mit dessen Zugbolzen und untere Führungsrolle.

Die Verriegelung links unten erfolgt durch eine vom Verriegelungsblock über Kulisse und Mitnehmer betätigte Verriegelungsstange.

Die Verriegelungsstange wird in der Schliessstellung mit dem Verriegelungsblock gekuppelt.

An der unteren Ecke der Türvorderkante entfällt jegliche sichtbare und unfallgefährliche Verriegelungsmechanik.

Der Antrieb für die Schiebebewegung, sowie die Führung der Tür unten und oben werden zusammen mit der Tür ausgeschwenkt.

Die Erfindung wird im folgenden anhand eines Ausführungsbeispiels näher erläutert und in den Zeichnungen dargestellt, es zeigen:
- Fig.1a: Draufsicht auf eine Schwenkschiebetür von innen,
- Fig.1b: eine Schwenk- und Verriegelungsmechanik,
- Fig.2: eine Schwenkmechanik oben links,
- Fig.3: eine Schwenkmechanik oben rechts,
- Fig.4: einen Verriegelungsblock, Frontansicht türinnenseitig,
- Fig.5: den Verriegelungsblock, Seitenansicht und
- Fig.6: die Verriegelung mittels Riegel und Verriegelungsstange.

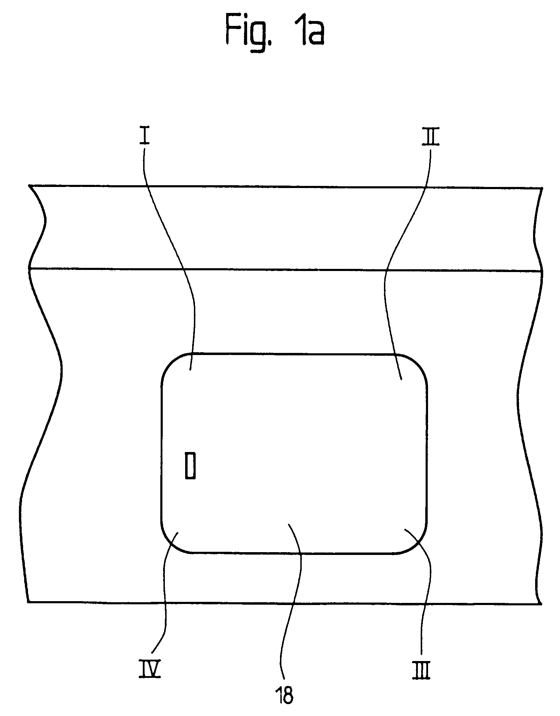

Die Fig.1a zeigt eine als Schwenkschiebetür ausgebildete Tür 18 mit der Definition der vier Eckpunkte I, II, III und IV. Die gezeigte Situation ist von innen her gesehen.

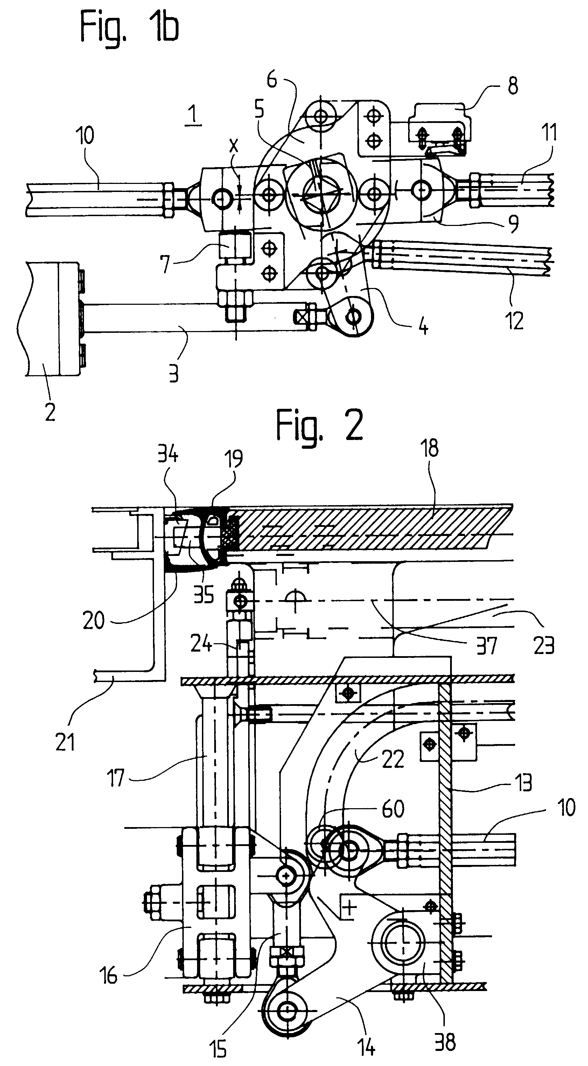

In der Fig.1b ist mit 1 eine Schwenk- und Verriegelungsmechanik bezeichnet. Der Antrieb der Schwenk- und Verriegelungsmechanik 1 erfolgt von einem hydraulisch oder pneumatisch funktionierenden Arbeitszylinder 2 über eine Kolbenstange 3, welche an einem Antriebshebel 4 angreift. Am Drehzapfen 5 ist ferner ein Doppelhebel 9 befestigt, welcher in der gezeigten Stellung links unten an einem Anschlag 7 anliegt und rechts oben einen Endschalter 8 betätigt. Diese Anschlagstellung des Doppelhebels 9 mit einem Weg x über den Totpunkt des Kurbeltriebes entspricht der Schliess- und Verriegelungsstellung der Tür. Der Drehzapfen 5, der Anschlag 7 und der Endschalter 8 sind in einem gemeinsamen Chassis 6 angeordnet. An den Enden des Doppelhebels 9 ist links eine erste Schubstange 10 und rechts eine zweite Schubstange 11 gelenkig befestigt. Der Antriebshebel 4 ist an einem Drehzapfen 5 mit Vierkant befestigt und weist etwa in der Mitte zwischen Drehzapfen 5 und Angriffspunkt der Kolbenstange 3 die drehbewegliche Befestigung einer nach rechts abgehenden dritten Schubstange 12 auf. Die dritte Schubstange 12 macht, bedingt durch die Hebelhalbierung etwa den halben Weg des Angriffspunktes der Kolbenbenstange 3. Infolge der unterschiedlichen Winkellage zwischen dem Antriebshebel 4 und dem Doppelhebel 9 wird die dritte Schubstange 12 beim Beginn einer Öffnungsbewegung sofort mitgenommen und beginnen die erste und zweite Schubstange 10 und 11, der Kurbeltriebcharakteristik folgend, erst später, einige Winkelgrade nach der Totpunktüberwindung sich allmählich zu bewegen. Umgekehrt erreichen die Schubstangen 10 und 11 beim Schliessen der Tür vor der dritten Schubstange 12 ihre Endlage, womit der sequentielle Ablauf von Schliessen, Andrücken und Verriegeln, bzw. Entriegeln, Loslösen und Schwenken gegeben ist.

In der Fig. 2 führt die erste Schubstange 10 durch eine Wand einer Kämpferstruktur 13 zu einem Winkelhebel 14 und ist mit diesem gelenkig verbunden. Der Winkelhebel 14 seinerseits ist drehbeweglich in einem an der Kämpferstruktur 13 befestigten Lagersupport 38 gelagert und weist mittels eines gelenkigen Verbindungsstückes 15 eine Wirkverbindung mit einem linken Schwenkwagen 16 auf, welcher mit Rollen auf einer mit der Kämpferstruktur 13 fest verbundenen Schwenkschiene 17 linear verschiebbar ist. Eine feste Verbindung zwischen dem linken Schwenkwagen 16 und einer Tür 18 ist mit einem Tragarm 37 ausgeführt. Von einem nicht dargestellten Teil des linken Schwenkwagens 16 führt eine Energieleitung 24 zu einem türinnenseitig befestigten Schiebezylinder 23, welcher anschliessend an die Schwenkbewegung die Schiebebewegung der Tür 18 längs der Aussenseite eines Wagens bewirkt. Am Tragarm 37 ist eine Führungsrolle 60 angeordnet, welche in einer in der Kämpferstruktur 13 befindlichen Schwenkkulisse 22 zwangsgeführt ist und dadurch einen abgerundeten Übergang zwischen Schwenken und Schieben ergibt.

Die Tür 18 weist an der linken Vorderkante eine Türdichtung 19 auf, welche in der Schliessstellung an einer Portalstruktur 21 befestigten doppellippigen Portaldichtung 20 anliegt, welche ihrerseits an der Portalstruktur 21 befestigt ist. Innerhalb der Querschnitte der Dichtungen 19 und 20 sind Teile einer später beschriebenen Verriegelungseinrichtung sichtbar in der Form eines Riegels 35 und einer Schlossplatte 34.

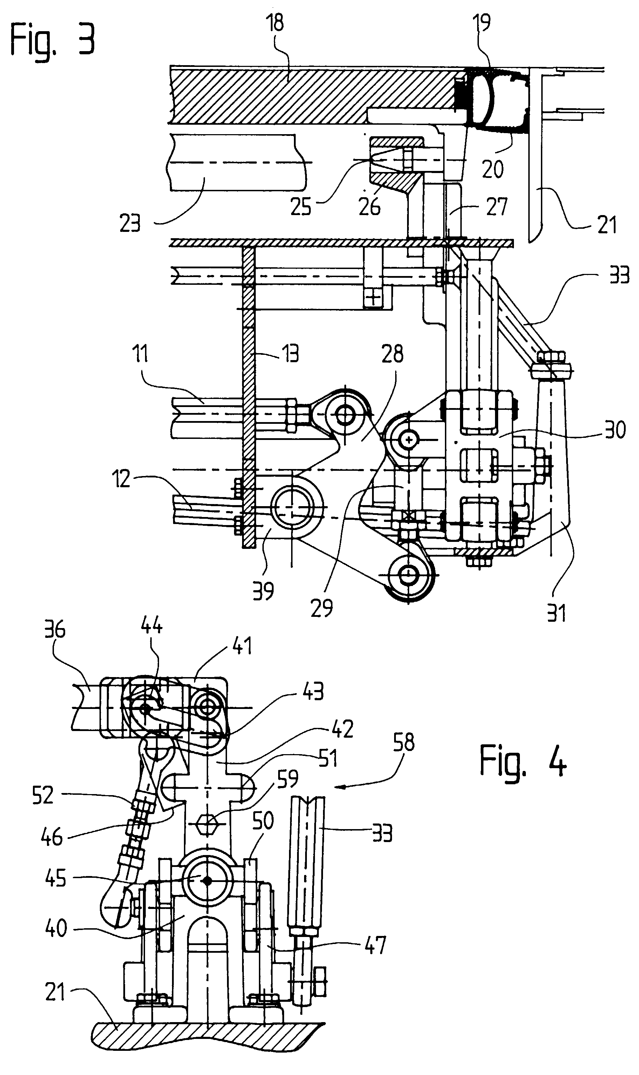

In der Fig.3 ist ein rechter Schwenkwagen 30 dargestellt, welche rollengelagert auf einer Schwenkschiene 32 verschiebbar ist. Der rechte Schwenkwagen 30 wird von der zweiten Schubstange 11 über einen Winkelhebel 28 und einem gelenkigen Verbindungsstück 29 verschoben. Der Winkelhebel 28 ist in einem an der Kämpferstruktur 13 befestigten Lagersupport 39 drehbar gelagert. Die Verbindung des rechten Schwenkwagens 30 mit der Tür 18 erfolgt beim Schliessen der Tür 18 am Ende der Schiebebewegung, bei welcher ein mit der Tür 18 fest verbundener konischer Verriegelungszapfen 25 in eine Verriegelungsbohrung 26 am Ende eines mit dem rechten Schwenkwagen 30 fest verbundenen Auslegers 27 taucht und somit eine kraft- und formschlüssige Verbindung zwischen Tür 18 und Schwenkwagen 30 bewirkt. Etwas verdeckt durch den Winkelhebel 28 führt die dritte Schubstange 12 unter diesem durch und steht in Wirkverbindung mit einem, ebenfalls nur teilweise sichtbaren Umlenkhebel 31, welcher eine schräg nach unten führende vierte Schubstange 33 betätigt.

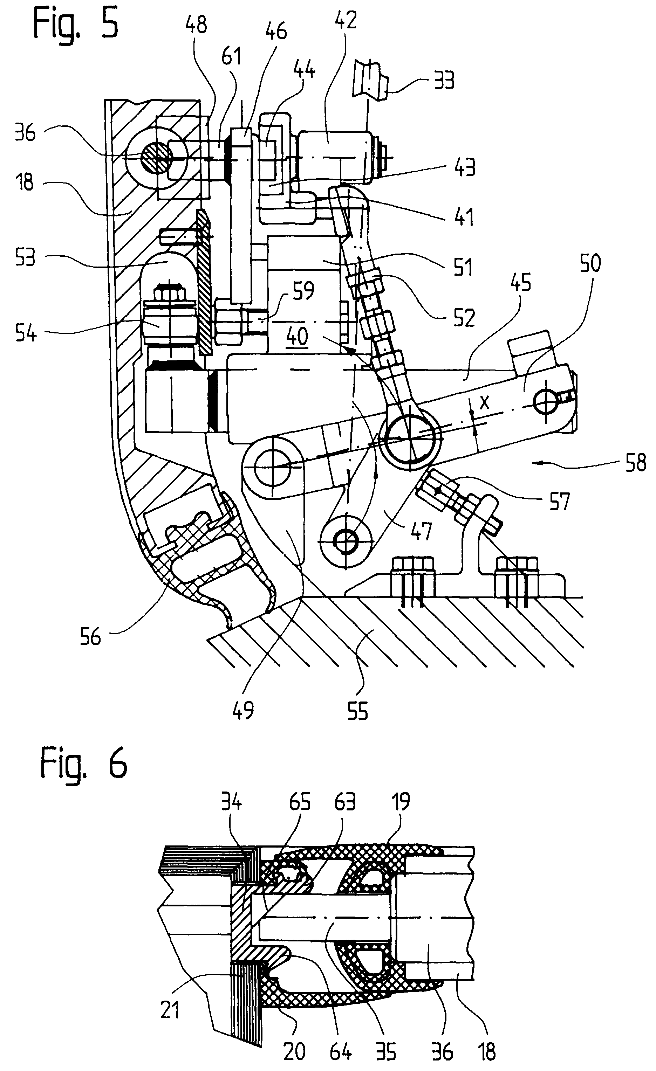

In der Fig.4 ist ein Verriegelungsblock 58 dargestellt, welcher sich, vom Wageninnern her gesehen, an der rechten unteren Türecke befindet. Die von oben nach unten wirkende vierte Schubstange 33 ist gelenkig mit einem Winkelhebel 47 verbunden, welcher in einem mit der Portalstruktur 21 verbundenen Lagersupport 40 drehbeweglich gelagert ist. Der Winkelhebel 47 ist auf der anderen Seite des Lagersupportes 40 über eine fünfte kurze Schubstange 52 schräg nach oben mit einer rechteckigen schwenkbaren Kulissenplatte 41 drehbeweglich verbunden. Der Lagersupport 40 weist eine vertikal nach oben gerichtete Verlängerung 42 auf, an deren Ende die schwenkbare Kulissenplatte 41 drehbeweglich gelagert ist. Die Form einer in der Kulissenplatte 41 rückseitig ausgefrästen Mitnehmerkulisse 43 ist gestrichelt dargestellt und umgreift und führt eine an einem Schwenkhebel 46 am oberen Ende angeordnete Mitnehmerrolle 44. Der Schwenkhebel 46 ist am linken Schenkel eines am unteren Teil der Verlängerung 42 beidseitig ausgeformten Hebelhalters 51 drehbeweglich gelagert. Der Schwenkhebel 46 ist über hier noch nicht dargestellte Teile mit einer in der Tür 18 verschiebbaren Verriegelungsstange 36 wirkverbunden. Mit 59 ist der Kopf einer Anschlagschraube bezeichnet, deren Funktion dann in der Fig.5 ersichtlich ist.

In der Fig.5 sind durch die Seitenansicht des Verriegelungsblockes 58 dessen Funktionen und ihre Abläufe ersichtlich. Der Winkelhebel 47 ist in einem mit dem Führungssupport fest verbundenen Lagersupport 49 drehbeweglich gelagert und weist eine etwas schräg nach links unten gerichtete V-förmige Kontur auf. Das linke Ende des oberen V-Schenkels ist im Lagersupport 49 gelagert und das linke Ende des unteren V-Schenkels ist die drehbewegliche Verbindung mit der vierten Schubstange 33. Die V-Spitze des Winkelhebels 47 ist einerseits die bewegliche Verbindung mit der fünften kurzen Schubstange 52 und anderseits eine drehbewegliche Verbindung mit einem weiteren nach rechts in der Flucht des oberen V-Schenkels verlaufenden Schub/Zug-Lasche 50. Der über die Mitnehmerkulisse 43 und Mitnehmerrolle 44 betätigte Rollenhebel 46 weist, gleichachsig mit der Mitnehmerrolle 44, auf seiner gegenüberliegenden Seite einen Mitnehmerzapfen 61 auf, welcher in einen, mit der Verriegelungsstange 36 fest verbundenen, Mitnehmer 48 greift. Die Anschlagschraube 59, resp. deren linkes Ende weist einen Gummipuffer mit rückwärtigem Sechskant auf und bestimmt im geschlossenen Zustand der Tür 18 deren genaue Schliesslage. Der Winkelhebel 47 und die Schub/Zug-Lasche 50 sind in der Schliesslage um einen Betrag x über den Totpunkt an eine, mit einer Türschwelle 55 fest verbundenen, Anschlageinrichtung 57 geschoben worden. Winkelhebel 47 und Schub/Zug-Lasche sind je beidseitig des Führungssupport angeordnet, wodurch das gleiche Hebelwerk sowohl für links- wie auch für rechtsöffnende Türen 18, mit entsprechend angepasster Wirkverbindung mit der vierten Schubstange 33, benutzbar ist. Die Schub/Zug-Laschen 50 sind mit ihren rechten Enden mit dem rechten Ende einer Schub/Zugs-Stange 45 beweglich verbunden, welche durch eine im Führungssupport 40 vorhandene Führungsbohrung führt und an ihrem linken Ende eine oberseitig angebrachte vertikalachsige Führungsrolle 54 aufweist. Die Tür 18 weist an dieser Stelle ihrer Länge nach eine tunnelartige Ausnehmung auf, welche innenseitig, zusammen mit einer Abdeckung 62, einen nach unten offenen Führungskanal 53 bildet. Die Unterkante der Tür 18 weist eine Schwellendichtung 56 auf.

In der Fig.6 sind die Einzelheiten der Verriegelung der linken Türvorderkante dargestellt. Die Verriegelungsstange 36 trägt stirnseitig gleichachsig einen Riegel 35 mit einer teilweise abgeschrägten Stirnseite. Der Riegel 35 ist in eine an der Portalstruktur befestigten Schlossplatte 34 eingetaucht und liegt mit der Schräge seiner Stirnseite an einer gleichschrägen Rampe 65 in der Schlossplatte 34 an. Die Schlossplatte 34 weist eine vorderseitig einen vorstehenden Rand 63 und innenseitig einen zurückstehenden Rand 64 auf. In der gezeigten Stellung hat der Riegel den vorderen Rand 63 der Schlossplatte 34 hintergriffen und bewirkt bei einer Weiterbewegung nach links eine zusätzliche Andrückbewegung der Tür 18 bis der Riegel 35, bzw. dessen restlicher flacher Stirnteil am Grund der Schlossplatte 34 anstösst.

Die Funktion der erfindungsgemässen Verriegelungseinrichtung für eine Tür 18 wird im folgenden an Hand des Ablaufes einer Schliess- und einer Öffnungsfunktion erläutert. Es handelt sich hier um eine, vom Wageninnern gesehen, um eine von links nach rechts öffnende Tür 18.

Schliessen der Schwenkschiebetür:
- Der Schiebezylinder 23 zieht die Tür 18 in die linke Endlage, wobei in den letzten paar cm das Einfahren des türseitigen konischen Verriegelungsbolzens in die Verriegelungsbohrung 26 des mit dem rechten Schwenkwagen 30 verbundenen Auslegers 27 erfolgt. Das bedeutet die Verriegelung des Eckpunktes II.
- Die Schwenk- und Verriegelungsmechanik 1, bzw. der Doppelhebel 9 hat in dieser Ausgangslage gegenüber der in der Fig.1 gezeigten Stellung eine um etwa 90° im Uhrzeigersinn gedrehte, nicht ganz vertikale Lage. Der Arbeitszylinder 2 dreht nun die Schwenk- und Verriegelungsmechanik 1 im Gegenuhrzeigersinnm, wobei durch die Lage des Doppelhebels 9 sofort die beiden Schwenkwagen 16 und 30 über die erste und zweite Schubstange 10 und 11, die Winkelhebel 14 und 28 und die gelenkigen Verbindungsstücke 15 und 29 nach dem Wageninnern gezogen und die ganze Oberseite der Tür 18 in die Schliessstellung gebracht und noch mehrere Winkelgrade vor dem Kurbeltotpunkt an die Portaldichtung 20 angedrückt wird. Der Eckpunkt I ist somit über den Schwenkwagen 16 und den Tragarm 37 gesichert.
- In der Schlussphase der Drehbewegung bzw. innerhalb der letzten ca 30 - 35 Winkelgrade der Schwenk- und Verriegelungsmechanik 1 schiebt die dritte Schubstange 12 die vierte Schubstange 33 nach unten und zieht über den Winkelhebel 47, die Schub/Zug-Lasche 45 und den Schwenkbolzen 45 die Türunterseite nach innen und drückt die rechte untere Türecke an die Portaldichtung 20. Dann ist der Eckpunkt III gesichert.
- In der Endphase des Zurückschwenkens der Tür 18 werden der Mitnehmerzapfen 61 am Rollenhebel 46 und der Mitnehmer 48 an der Verriegelungsstange 36 durch Ineinanderschieben miteinander mechanisch gekuppelt.
- In der Schlussphase der Drehbewegung des V-förmigen Winkelhebels 47 wird über die kurze fünfte Schubstange 52, die Kulissenplatte 43, die Mitnehmerkulisse 43, die Mitnehmerrolle 44, den Rollenhebel 46, den Mitnehmerzapfen 48 und den Mitnehmer 48 die Verriegelungsstange nach links geschoben, wobei sich der Riegel 35 zuerst hinter den vorstehenden Rand der Schlossplatte 34 schiebt, was die Verriegelung bewirkt und mit der fortgesetzten Bewegung nach links über die Schräge am Riegel 35 und die Rampe 65 in der Schlossplatte 34 ein Andrücken an die Portaldichtung 20 der linken unteren Türecke, also des letzten Eckpunktes IV erfolgt.
- Die Schwenk- und Verriegelungsmechanik 1 und der Verriegelungsblock 58 haben nun die Endlage über ihre Kurbeltotpunkte erreicht, so dass ein manuelles Entriegeln und Aufstossen der Tür ohne hierzu benötigte Mittel nicht mehr möglich ist.

Öffnen der Schwenkschiebetür:
- Beim Öffnen der Tür 18 laufen die für das Schliessen beschriebenen Funktionen in der umgekehrten Reihenfolge ab, welche sind:
- Loslösen und Entriegeln der unteren linken Türecke durch Zurückziehen des Riegels 35 (Eckpunkt IV).
- Loslösen der rechten unteren Türecke durch herausfahrenden Schwenkbolzen 45 mit anschliessend beginnendem Herausstossen der ganzen Türunterkante (Eckpunkt III).
- Loslösen mit anschliessendem Ausschwenken der Türoberkante durch Herausfahren der Schwenkwagen 16 und 30 (Eckpunkte I und II).
- Auseinanderfahren des konischen Verriegelungsbolzens 25 aus der Verriegelungsbohrung 26 beim Beginn der Schiebebewegung durch den Schiebezylinder 23 (Eckpunkt II).

Das Verriegelungssystem weist zusätzlich eine nicht dargestellte automatische Notverriegelungsfunktion auf. Bei Ausfall der Energiesysteme wird die Tür 18 von Hand von der Offenstellung in die Geschlossenstellung geschoben, wobei der Schiebezylinder 23 als Druckerzeuger arbeitet. Die beim manuellen Zuschieben im Schiebezylinder 23 erzeugte Druckluft wird in einem nicht dargestellten Druckbehälter gespeichert. Der die Schwenkbewegung und Verriegelung der Tür 18 ausführende Arbeitszylinder 2 ist über ein nicht dargestelltes Mehrwegeventil mit dem Druckbehälter verbunden. Beim Übergang zwischen Schiebebewegung und Schwenkbewegung betätigt der im Druckbehälter gespeicherte Druck den Arbeitszylinder 2, welcher dann mit seiner Kolbenstange 3 die vorgehend beschriebene Verriegelungsfunktionen ausführt.

Durch den zeitlich und örtlich gestaffelten Ablauf der Löse-Entriegelungs- und Öffnungsfunktionen bzw. Schliess-Verriegelungs- und Andrückfunktionen der Tür 18 ist einerseits ein Losreissen einer beispielsweise angefrorenen Dichtung 19 einer Tür 18 bzw. ein zuverlässiges Andrücken mit kleinem momentanen Kraftaufwand möglich. Ferner sind die Endlagen der Verriegelungen und Sicherungen und an allen vier Eckpunkten mittels nicht dargestellten Endschaltern überwacht, deren Kontakte in den Schaltkreis für die Fahrtfreigabe angeordnet sind.

In weiter entwickelten Formen der Erfindung können einzelne Funktionseinheiten neue Konstruktionsmerkmale aufweisen. So ist beispielsweise beim Riegel 35 und der Schlossplatte 34 ein Paarung mit Rollreibung diskutabel, indem der Riegel 35 anstelle der schrägen Stirnfläche eine kleine Rolle aufweist, welche auf gleiche Art, aber praktisch ohne Reibung das Verriegeln und Andrücken ermöglicht. Damit ist auch das Schmierproblem beseitigt, welches bei Gleitreibung, auch bei optimaler Materialpaarung, von Bedeutung ist.

Die Verriegelung beim Eckpunkt IV kann in einer weiteren Variante durch einen, ebenfalls mechanisch betätigten, Riegel ausgeführt werden, welcher aus dem Portalrahmen in eine Verriegelungsbohrung in der seitlichen Türstirnseite greift.

## Patentansprüche

1. Verriegelungssystem für eine automatische Schwenkschiebetür (18), welche mittels einer zentralen Schwenk- und Verriegelungsmechanik am Ende der Schliessbewegung eine mechanische Verriegelung und ein Andrücken des Türblattes an die Türdichtung (19, 20) ausführt, dadurch gekennzeichnet,
dass die Schwenk- und Verriegelungsmechanik an vier Eckpunkten (I, II, III, IV) der Schwenkschiebetür (18) angreift und dass die Schwenk- und Verriegelungsmechanik einen Doppelhebel (9) und einen zum Doppelhebel (9) um einen definierten Winkel versetzten Antriebshebel (4) aufweist, wobei der Winkel ein zeitlich gestaffeltes Verriegeln oder Sichern an die Türdichtung (19, 20) bzw. ein zeitlich gestaffeltes Entriegeln und Loslösen der Tür (18) von der Türdichtung (19, 20) an den einzelnen Eckpunkten (I, II, III, IV) der Tür (18) bewirkt.

2. Verriegelungssystem nach Anspruch 1, dadurch gekennzeichnet, dass für das Verriegeln und Andrücken des Türoberteils ein Verriegelungsbolzen (25) an der Tür (18) und und ein erster Schwenkwagen (30) mit Verriegelungsbohrung (26) bzw. ein zweiter Schwenkwagen (14) mit einem mit der Tür (18) verbundenen Tragarm (37) vorhanden ist.

3. Verriegelungssystem nach Anspruch 1, dadurch gekennzeichnet, dass an dem Doppelhebel (9) eine erste und eine zweite Schubstange (10, 11) in der Schliessstellung totpunktnah angelenkt sind, welche zu den zuerst schliessenden Schwenkmechaniken (14, 30) führen.

4. Verriegelungssystem nach Anspruch 1, dadurch gekennzeichnet, dass für das Verriegeln und Andrücken des Türunterteils ein vom Antriebshebel (4) über eine dritte Schubstange (12), einen Umlenkhebel (31) und eine vierte Schubstange (33) betätigter Verriegelungsblock (58) vorhanden ist.

5. Verriegelungssystem nach Anspruch 4, dadurch gekennzeichnet, dass der Verriegelungsblock (58) einen über einen Winkelhebel (47) und Schub/Zug-Laschen (50) betätigten Schwenkbolzen (45) mit Führungsrolle (54) aufweist.

6. Verriegelungssystem nach Anspruch 4, dadurch gekennzeichnet, dass der Verriegelungsblock (58) einen über den Winkelhebel (47), eine fünfte Schubstange (52), eine Kulissenplatte (41) mit Mitnehmerkulisse (43) betätigten, mit einem Mitnehmer (48) in der Tür (18) kuppelbaren Rollenhebel (46) aufweist.

7. Verriegelungssystem nach einem der vorhergehenden Ansprüche, dadurch gekennzeichnet, dass die Tür (18) eine vom Rollenhebel (46) über den Mitnehmer (48) betätigte Verriegelungsstange ((36) aufweist.

8. Verriegelungssystem nach einem der vorhergehenden Ansprüche, dadurch gekennzeichnet, dass die Verriegelungsstange (36) einen in eine portalseitige Schlossplatte (34) eingreifenden Riegel (35) mit teilweise abgeschrägter Stirnseite aufweist und dass die Schlossplatte (34) einen das Verriegeln bewirkenden vorstehenden Rand (63) und innenseitig eine das Andrücken bewirkende, mit der angeschrägten Stirnseite des Riegels (35) übereinstimmende schräge Rampe (65) aufweist.

## Claims

1. Locking system for an automatic pivoting/sliding door (18) which by means of a central pivoting and locking mechanism, at the end of the closing movement, executes a mechanical locking operation and causes the door leaf to be pressed against the door seal (19, 20), characterized in that the pivoting and locking mechanism acts at four corner points (I, II, III, IV) of the pivoting/sliding door (18), and in that the pivoting and locking mechanism has a double lever (9) and a drive lever (4), which is offset by a defined angle in relation to the double lever (9), the angle causing temporally staggered locking or securing against the door seal (19, 20), or temporally staggered unlocking and release of the door (18) from the door seal (19, 20), at the individual corner points (I, II, III, IV) of the door (18).

2. Locking system according to Claim 1, characterized in that provided for locking purposes and for subjecting the top part of the door to a pressing action are a locking bolt (25) on the door (18) and a first pivoting carriage (30) with locking bore (26) as well as a second pivoting carriage (14) with a carrying arm (37) connected to the door (18).

3. Locking system according to Claim 1, characterized in that a first and a second connecting rod (10, 11) are articulated on the double lever (9), in the vicinity of dead centre in the closed position, and lead to the pivoting mechanisms (14, 30) which close first of all.

4. Locking system according to Claim 1, characterized in that provided for locking purposes and for subjecting the bottom part of the door to a pressing action is a locking block (58) which is actuated by the drive lever (4) via a third connecting rod (12), a deflecting lever (31) and a fourth connecting rod (33).

5. Locking system according to Claim 4, characterized in that the locking block (58) has a pivoting bolt (45), with guide roller (54), which is actuated by an angle lever (47) and push/pull link plates (50).

6. Locking system according to Claim 4, characterized in that the locking block (58) has a roller lever (46) which is actuated via the angle lever (47), a fifth connecting rod (52) and a guide plate (41) with carry-along guide (43) and can be coupled to a carry-along element (48) in the door (18).

7. Locking system according to one of the preceding claims, characterized in that the door (18) has a locking rod (36) which is actuated by the roller lever (46) via the carry-along element (48).

8. Locking system according to one of the preceding claims, characterized in that the locking rod (36) has a locking bolt (35) which engages in a doorway-side striking plate (34) and has a partially bevelled end side, and in that the striking plate (34) has a projecting border (63), which causes the locking operation to take place, and, on the inside, a sloping ramp (65) which causes the pressing action and corresponds to the bevelled end side of the locking bolt (35).

## Revendications

1. Système de verrouillage pour une porte coulissante et louvoyante automatique (18) qui, au moyen d'un mécanisme central de louvoiement et de verrouillage, opère un verrouillage mécanique et un serrage du battant de la porte contre la garniture de la porte (19, 20) à la fin du mouvement de fermeture, caractérisé en ce que le mécanisme de louvoiement et de verrouillage attaque quatre points d'angle (I, II, III, IV) de la porte coulissante et louvoyante (18) et en ce que le mécanisme de louvoiement et de verrouillage présente un levier double (9) et un levier d'entraînement (4) décalé d'un angle défini par rapport au levier double (9), l'angle provoquant un verrouillage ou un blocage contre la garniture de porte (19, 20) étalé dans le temps, respectivement un déverrouillage et un dégagement étalés dans le temps de la porte (18) par rapport à la garniture de porte (19, 20) aux points d'angles individuels (I, II, III, IV) de la porte (18).

2. Système de verrouillage suivant la revendication 1, caractérisé en ce qu'il existe, pour le verrouillage et le serrage de la partie supérieure de la porte, un tenon de verrouillage (25) sur la porte (18) et un premier chariot de louvoiement (30) avec un trou de verrouillage (26) respectivement un second chariot de louvoiement (14) avec un bras porteur (37) relié à la porte (18).

3. Système de verrouillage suivant la revendication 1, caractérisé en ce qu'au levier double (9) sont articulées une première et une deuxième bielles (10, 11) proches de leur point mort dans la position de fermeture, qui mènent aux mécanismes de louvoiement (14, 30) se fermant en premier lieu.

4. Système de verrouillage suivant la revendication 1, caractérisé en ce qu'il existe, pour le verrouillage et le serrage de la partie inférieure de la porte, un bloc de verrouillage (58) actionné par le levier d'entraînement (4) via une troisième bielle (12), un levier de renvoi (31) et une quatrième bielle (33).

5. Système de verrouillage suivant la revendication 4, caractérisé en ce que le bloc de verrouillage (58) présente une tringle de louvoiement (45) avec un galet de guidage (54) actionnée par un levier coudé (47) et des pattes de poussée/traction (50).

6. Système de verrouillage suivant la revendication 4, caractérisé en ce que le bloc de verrouillage (58) présente un levier porte-galet (46) actionné par le levier coudé (47), une cinquième bielle (52), une plaque de coulisse (41) avec une coulisse d'entraînement (43), à coupler avec une pièce d'entraînement (48) montée dans la porte (18).

7. Système de verrouillage suivant l'une quelconque des revendications précédentes, caractérisé en ce que la porte (18) présente une tringle de verrouillage (36) actionnée par le levier porte-galet (46) via la pièce d'entraînement (48).

8. Système de verrouillage suivant l'une quelconque des revendications précédentes, caractérisé en ce que la tringle de verrouillage (36) présente un verrou (35) avec une face d'extrémité partiellement biseautée s'engageant dans une plaque de serrure (34) située du côté de l'huisserie, et en ce que la plaque de serrure (34) présente un bord proéminent (63) assurant le verrouillage et intérieurement une rampe oblique (65) correspondant à la face d'extrémité biseautée du verrou (35) et assurant le serrage.
